# EUROPEAN PATENT SPECIFICATION

(11) **EP 2 063 424 B1**
(45) Date of publication and mention of the grant of the patent: **27.04.2011**
(21) Application number: 08305775.2
(22) Date of filing: 05.11.2008
(51) Int. Cl.: G11B 7/0065

(54) **Shift-insensitive storage of information in page oriented optical data storage systems**
Verschiebungs-unempfindliche Speicherung von Informationen auf seitenorientierten optischen Datenspeichersystemen
Stockage d'informations insensible au déplacement dans des systèmes de stockage de données optiques orientées sur page

(30) Priority: 15.11.2007 EP 07120784
(43) Date of publication of application: 27.05.2009
(73) Proprietor: Thomson Licensing SA, 92130 Issy-les-Moulineaux (FR)
(72) Inventor: Eyberg, Rudolf, 78052, Villingen-Schwenningen (DE); Przygodda, Frank, 88045 Friedrichshafen (DE); Malki, Oliver, 78176, Fuetzen (DE)
(74) Representative: Schmidt-Uhlig, Thomas

(56) References cited:
- EP-A- 0 817 201
- EP-A- 1 830 358
- US-B1- 7 116 626
- DATABASE WPI Section EI, Week 200806 Thomson Scientific, London, GB; Class T01, AN 2008-A92241 XP002476372 -& KR 2007 0002949 A (DAEWOO ELECTRONICS CORP [KR]) 5 January 2007 (2007-01-05)

## Description

The present invention relates to a data page for optical data storage in an optical storage system, e.g. a holographic storage system, with an increased insensitivity against movement, to an optical storage medium, e.g. a holographic storage medium comprising such data pages, to an apparatus for reading from and/or writing to an optical storage medium comprising such data pages, and to a method for reading and/or writing such data pages.

The invention is described below using a holographic storage system as an example. It is apparent to a person skilled in the art that the invention is applicable within other optical storage systems.

In holographic data storage digital data are stored by encoding the interference pattern produced by the superposition of two coherent laser beams, where one beam, the so-called 'object-beam', is modulated by a spatial light modulator (SLM) and carries the information to be recorded. The second beam serves as a reference beam. The interference pattern leads to modifications of specific properties of the storage material, which depend on the local intensity of the interference pattern. Reading of a recorded hologram is performed by illuminating the hologram with the reference beam using the same conditions as during recoding. This results in the reconstruction of the recorded object beam.

One advantage of holographic data storage is an increased data capacity. Contrary to conventional optical storage media, the volume of the holographic storage medium is used for storing information, not just a single or few two-dimensional layers. One further advantage of holographic data storage is the possibility to store multiple data in the same volume, e.g. by changing the angle between the two beams or by using shift multiplexing, etc. Furthermore, instead of storing single bits, data are stored as data pages. Typically a data page consists of a matrix of light-dark-patterns, i.e. a two dimensional binary array or an array of grey values, which code multiple bits. Data pages consisting of patterns showing different phases can also be used. This allows to achieve increased data rates in addition to the increased storage density. The data page is imprinted onto the object beam by the SLM and detected with an array detector.

Increasing the data capacity and the data rate are two of the main tasks when developing holographic data storage systems. Increasing the data capacity is closely related to decreasing the access time to a certain data page or volume of the optical storage medium.

The holographic medium is read-out out while being illuminated by the reference beam as described above. The position of the medium with respect to the optics during reading of a hologram has to be exactly the same as during the writing of the hologram. A displacement of the medium from the ideal read-out position decreases the intensity of the read-out pattern on the detector array. Further, the image sharpness is reduced and hence the image is blurred. In addition, the retrieved data page image is misaligned relative to the detector.

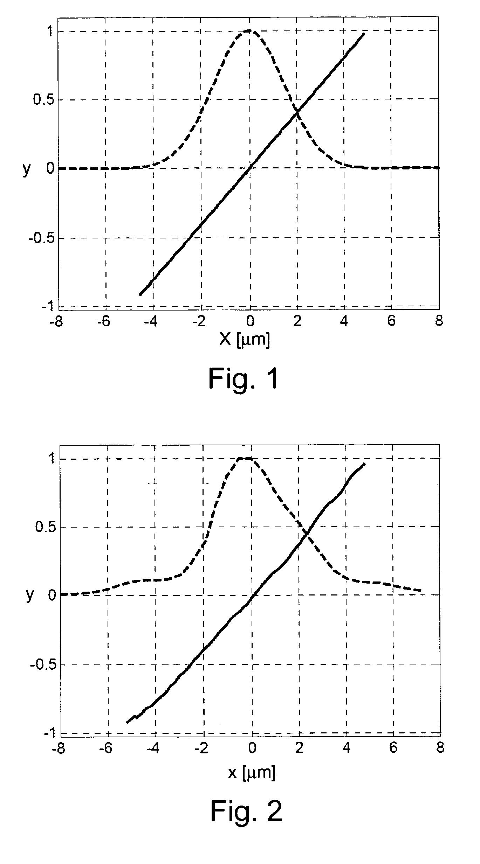

The principle behaviour of image intensity and relative image displacement on the detector as a function of the hologram displacement is shown in Fig. 1. The solid line shows the relative image displacement of the read out hologram on the detector (y-axis) as a function of the position of the medium (x-axis). The dotted line shows the relative image intensity of the read out hologram on the detector (y-axis) as a function of the position of the medium (x-axis). A hologram at position x=0 is optimally aligned. In this case, the read out picture on the detector has a minimal shift and a maximal light intensity.

Regarding these effects, a not so precise positioning of the hologram will degrade the data page image on the detector. Especially in systems with continuously rotating disks the exposure time of the hologram has to be short enough to freeze the movement. Pulsed lasers, fast shutters and fast detectors are required. Long exposures or fast movement of the medium lead to a blurred image.

European Patent Application EP 0 817 201 A2 discloses a method and apparatus for compensating distortion while reading from a holographic medium. Feedback is employed in the holographic system for compensating thermal, optical or mechanical variations.

European Patent Application EP 1 830 358 A2 discloses a system for reading a holographic data page, the data page containing frame marks having a larger light intensity than other data pixels, the frame marks are used for alignment of a holographic storage medium containing the data page.

United States Patent US 7 116 626 B1 shows a method for determine misalignment of a retrieved image from a holographic storage medium. Further, the storage system includes micro-actuators configured to move the storage medium or the detector to compensate the misalignment.

It is an object of the invention to propose a data page which is less sensitive concerning movement.

According to an example not forming part of the invention, on a data page there are one or more areas including data which is less sensitive to movement or inaccurate positioning during read-out. This allows read-out of the information stored in these areas of the data page during fast movement of the storage medium, for example a holographic storage medium. This is achieved for example by the use of special modulation or coding of data in these areas. Misalignment or movement in general leads to lower signal-to-noise ratios (SNR), which can partly be compensated by the modulation or coding of the data in these areas.

According to the invention, data pixels are enlarged in movement direction in a shift insensitive area. In this way they are much better detected even if blurring in this direction happens due to the movement of the medium parallel to the detector surface. On a rotating media like for example a disk, at each point a movement vector perpendicular to the radius and perpendicular to the optical axis of the detector defines the direction of movement. Crosstalk from one pixel to another during fast moving is reduced. This corresponds to a data modulation with reduced spatial frequencies, which makes accurate alignment to a certain extent less important.

In an advantageous manner, 'on'-pixels in the shift insensitive area have the same size in movement direction. In other words, each 'on'-pixel has the same length. Therefore, each 'on'-pixel has the same spatial frequency in moving direction. Pixel estimation in case of blurred images is facilitated because the pixel length and the spatial frequency of the pixels are known.

In an advantageous manner, the modulation scheme does not allow two 'on'-pixels, e.g. two illuminated pixels, side by side. This improves detectability of each pixel by reducing crosstalk from one pixel to another. Edges of a detected signal can be used to improve alignment.

To improve tracking and alignment perpendicular to the moving direction, the shift insensitive area preferably includes a line in moving direction only containing 'on'-pixels or only containing 'off'-pixels. Alignment perpendicular to the moving direction can be ensured while the medium is arbitrarily shifted in moving direction, and can be performed independent of the moving speed.

In an advantageous manner, the shift insensitive area contains at least one of address information, content information, tracking control information or focusing control information. This information is usually necessary to locate a certain data page, to obtain an overview of the whole content of the stored data or to prepare read-out of the data. Usually, this information has a lower data volume and has to be obtained fast because it is needed before read-out of the whole data can be started. After reading this data, the well known standard read-out process is used to obtain the data of interest from an area with a known data page format. This leads to fast access to a specific data page, fast search routines and fast setup of the reading process.

A data page containing only shift insensitive areas is preferably stored between two data pages. This improves the read-out process during continuously moving the storage medium.

In another advantageous manner, a data page contains multiple shift insensitive areas with different degrees of shift insensitivity. Various read-out speeds and various misalignment tolerances are supported by such a medium dependent on the requirements of the application for which the stored data are used. Different coding schemes are supported in these areas.

Favourably, the described data pages are used for holographic data storage systems. Multiple data pages are stored within a holographic storage medium. Alignment requirements to reduce crosstalk and to enhance SNR are high in these systems. Using shift insensitive areas, which reduce alignment requirements, provide a big advantage.

It is a further object of the invention to propose an apparatus for reading from an optical storage medium containing data pages according to the invention. The apparatus has means for detecting and decoding shift insensitive areas.

In an advantageous embodiment of the invention an apparatus for reading a data page according to the invention from an optical storage medium provides an additional optical path optimized for reading the shift insensitive areas. This further enhances the read-out speed and lowers the error rate. The apparatus includes a CCD for reading data of the data area and a CCD for reading data of the shift insensitive area. The CCD for detecting the shift insensitive data is for example a two dimensional CCD. It is also within the scope of the invention, to provide for example a lens system and a one dimensional CCD for reading the shift insensitive area. The read out signal is a time dependant one dimensional signal. It is also within the scope of the invention to use a common CCD and to adapt signal processing to the specific characteristic of the read out data of the shift insensitive area, for example, to use specific error correction or to adapt oversampling.

It is a further object of the invention to propose an apparatus for writing to an optical storage medium containing data pages according to the invention. The apparatus has means for coding the data for the shift insensitive area. It is also within the scope of the invention to provide distinctive SLMs for writing the shift insensitive area and for writing the data area of a data page.

It is a further object of the invention to propose a method for reading and/or writing a data page according to the invention. The method contains steps for detecting the optical storage media, identifying the shift insensitive areas within the data pages, detecting the pixels within the shift insensitive areas and decoding the derived data from these areas or coding data to be written to shift insensitive areas.

For better understanding the invention shall now be explained in more detail in the following description with reference to the figures. It is understood that the invention is not limited to this exemplary embodiment and that specified features can also expediently be combined and/or modified without departing from the scope of the present invention.
- Fig. 1: shows the normalized value of the relative image intensity and the relative displacement of the image on the detector dependent of the data page displacement retrieved by a model,
- Fig. 2: shows the normalized value of the relative image intensity and the relative displacement of the image on the detector dependent of the data page displacement retrieved by measurements,
- Fig. 3: shows an example of a data page according to the Prior Art,
- Fig. 4: shows the detected image of the data page shown in Fig. 3, retrieved during the read-out process in case of a fast moving medium,
- Fig. 5: schematically depicts a data page containing a data area and a shift insensitive area,
- Fig. 6: shows a data page containing a data area and a shift insensitive area according to a first embodiment,
- Fig. 7: shows the detected image of the data page shown in Fig. 6, retrieved during the read-out process in case of a stationary medium,
- Fig. 8: shows the detected image of the data page shown in Fig. 6, retrieved during the read-out process in case of a fast moving medium,
- Fig. 9: shows pixels in the shift insensitive area as the result of a pixel image which is extended in the direction of image movement,
- Fig. 10: shows pixels in the shift insensitive area which are arranged like a bar-code,
- Fig. 11: show pixels that are arranged with low frequency modulation,
- Fig. 12: shows a pixel area which is arranged without white neighbour elements perpendicular to the moving direction,
- Fig. 13: shows a pixel area in which one pixel row is constantly white without white neighbour elements perpendicular to the moving direction,
- Fig. 14: shows a pixel area using large extended pixel blocks,
- Fig. 15: shows a pixel area divided in parts of different degrees of shift insensitivity,
- Fig. 16: shows a data page in which the shift insensitive information is not located in a specific area but spread over the data page,
- Fig. 17: shows a data page containing shift insensitive information only which is written between two other data pages,
- Fig. 18: shows a schematically example for an additional optical path including a lens system and detector array being optimized to fast detection of the shift insensitive pixel areas and a lens system and detector array being optimized to the common data page,
- Fig. 19: schematically shows an apparatus for reading and/or writing to a holographic storage medium including a lens system and detector array being optimized to fast detection of the shift insensitive pixel areas and a lens system and detector array being optimized to the common data page.

Fig. 1 shows the effects of a displacement of the position of the medium relative to the optics during the read-out process compared to the writing process. Image intensity of the read-out data page on the detector is shown as function of the displacement on the basis of a model. Further, relative image displacement of the read-out image on the detector is shown as a function of the displacement of the medium.

Fig. 2 shows the same image intensity and image displacement on the basis of measurements. An inaccurate positioning of the data page compared to the optical path will significantly degrade the received image on the detector and hence lower the SNR. In systems with continuously rotating disks alignment is especially a challenge.

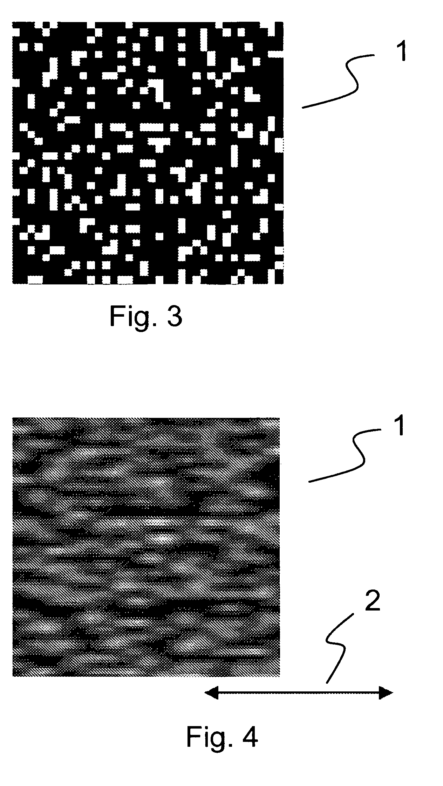

Fig. 3 shows a data page 1 known in the art which is read-out by a holographic system. Light and dark pixels of equal size are distributed over the whole data page 1.

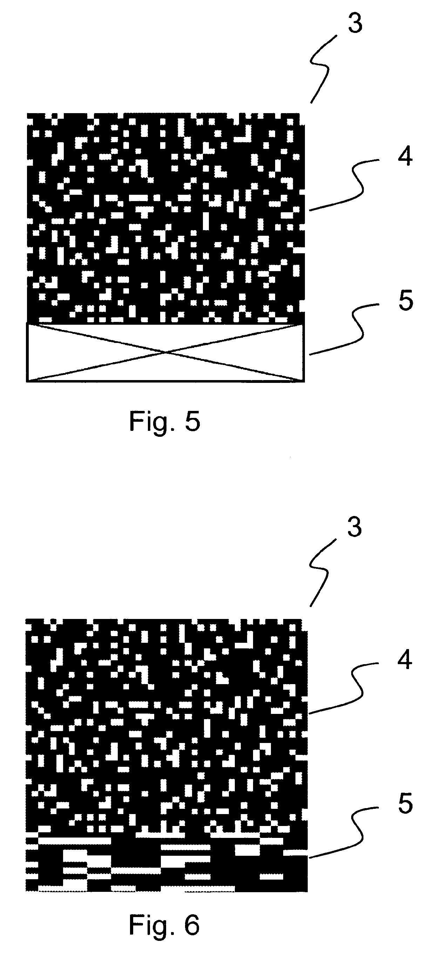

Fig. 4 shows the read-out results of the data page 1 depicted in Fig. 3 if the data page is moved in a movement direction 2 parallel to the detector array during the read-out process. The image is blurred strongly and has a small SNR. In many cases the data can not be retrieved using this detector image. In the following Figs. 5 - 18 the movement direction 2 is omitted for simplicity.

Fig. 5 schematically shows a data page 3 according to the invention. It is divided in a data area 4 and at least one shift insensitive area 5. The shift insensitive area 5 is depicted at the bottom of the data page 3 but it is understood by someone skilled in the art, that the shift insensitive area can be located anywhere else in the data page 3. Locating the shift insensitive area 5, for example, at the top or at the bottom of the data page 3 has the advantage that the sensor for reading the shift insensitive area 24 and the sensor for reading the shift sensitive area 22 can be located side by side. Locating the shift insensitive area 5 in the middle of the data page 3 has the advantage that blurring effects are usually minimized in the middle of a data page 3, because calibration is done mainly in this area. Locating the shift insensitive area 5 at the left side or right side of the data page 3 has the advantage that the shift insensitive pixels are distributed equally in the direction perpendicular to the moving direction. This assures that at least parts of the shift insensitive area 5 are in a well calibrated region in any case. The shift insensitive area 5 according to the invention can be realized in many ways. Some advantageous embodiments will be described in more detail below.

Fig. 6 shows a data page 3 according to Fig. 5, using an exemplary embodiment of the invention for the shift insensitive area 5. The pixels are enlarged in a direction that corresponds to the moving direction 2 of the data page 3.

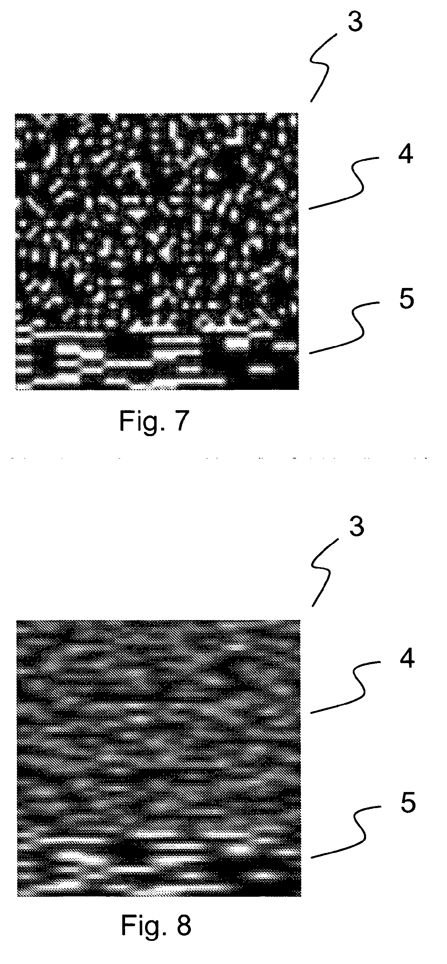

Fig. 7 shows the detected image of the data page 3 depicted in Fig. 6 if the medium is not moved. Both, the data area 4 and the shift insensitive area 5 are retrieved with high image quality.

Unlike, Fig. 8 shows the detected image of the data page 3 depicted in Fig. 6 if the medium is moved in moving direction. The described effects of misalignment lead to a blurred image. In case of the data area 4, the image has a poor SNR and cannot be retrieved. In case of the shift insensitive area 5, the detected image can be retrieved much better than the data area 4.

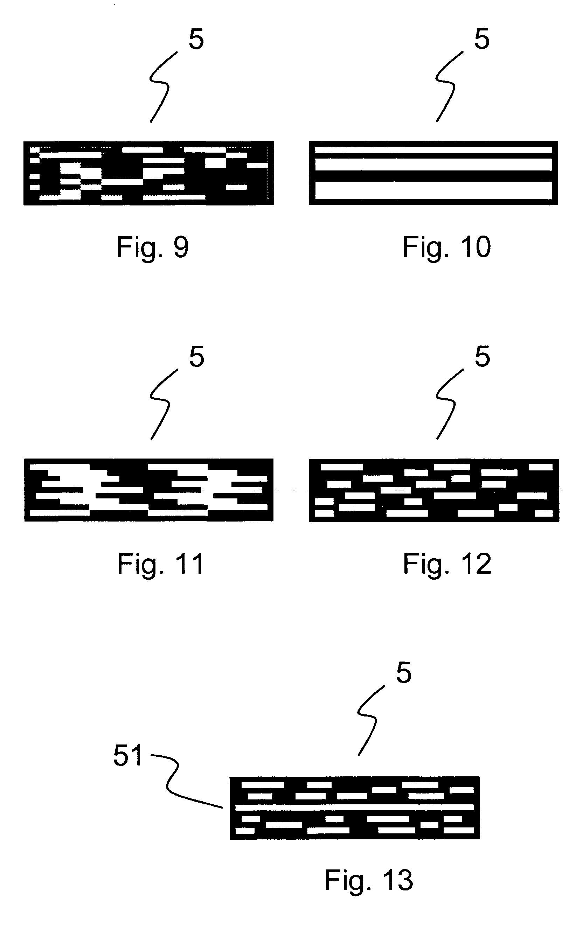

Fig. 9 shows a possible implementation of the shift insensitive area 5. The data pixels are extended in the direction of movement and hence the requirements to alignment conditions in moving direction decrease and faster moving of the medium is allowed.

Fig. 10 shows another embodiment of the invention. Here, the pixels of the shift insensitive area 5 are arranged like a barcode. This allows reading of the content of the shift insensitive area 5 independent from the position of the data page 3 in moving direction and independent from the speed in moving direction.

Fig. 11 shows a shift insensitive area 5 where all data pixels have the same spatial frequency in moving direction and, therefore, have the same size in moving direction. Detection of the shift insensitive area 5 at a low spatial frequency is enabled.

Fig. 12 shows a modulation in which no 'on'-pixels are located side by side in a direction perpendicular to the moving direction in the shift insensitive area 5. This further reduces crosstalk from one pixel row in moving direction to another.

Fig. 13 shows a shift insensitive area 5 which uses a horizontal line 51 which is constantly in 'on'-state. Independent from the moving speed, this line 51 will always lead to the same result on the detector. A line like this may be used for example for focusing and tracking. In case of disruption of the read out line, loss of track can be assured without evaluating the data signal. Focusing is eased due to a well known constant focusing signal.

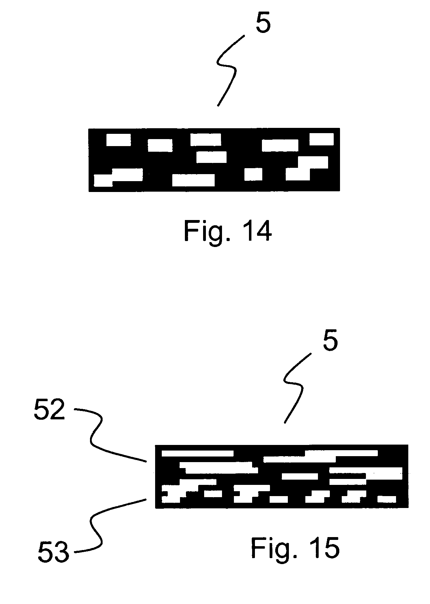

Fig. 14 uses large extended blocks in moving direction and in the direction perpendicular to the moving direction 5. Lower resolution of the detector array and/or the optical path is allowed for reading this area compared to a common data area 4.

Fig. 15 shows two different shift insensitive areas 52, 53 with different degrees of shift insensitivity, which can be read-out with different velocities of the medium. This further enhances the degrees of freedom in developing a system. The content of the stored information in the shift insensitive areas 52, 53 is classified in different categories according to their requirements on reading speed and hence medium velocity during read-out.

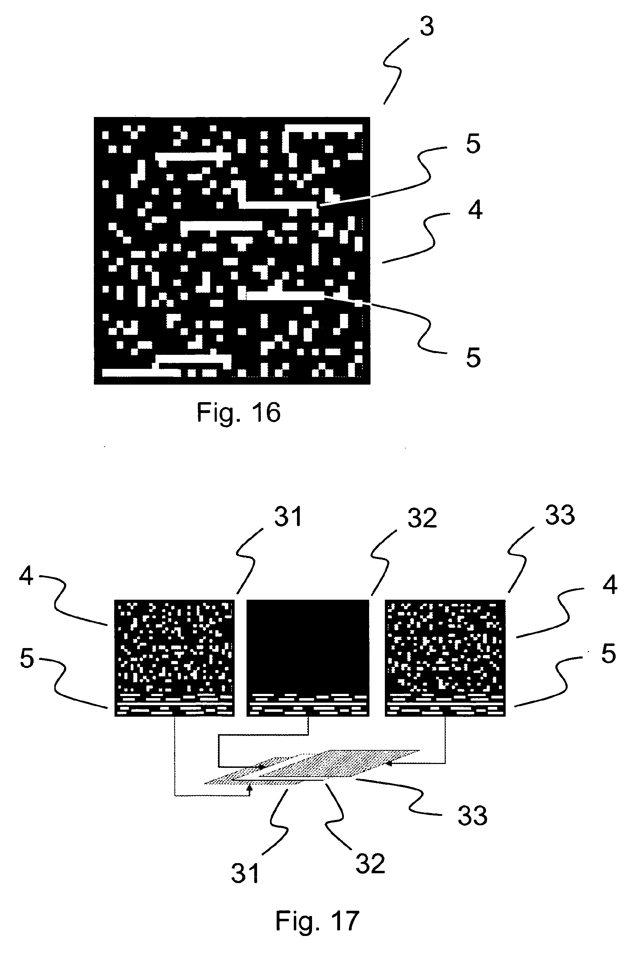

Fig. 16 shows an example of a shift insensitive area 5 that is spread in movement direction and perpendicular to the movement direction over the whole data page 3. It is not concentrated in one specific area. Local performance differences of the optical path or local blurs of the detector image are overcome.

Fig. 17 schematically shows a data page 32 containing only shift insensitive information which is located between two data pages 31, 33 including a shift insensitive area 5 and a common data area 4. The two data pages 31, 33 may also contain only a common data area 4.

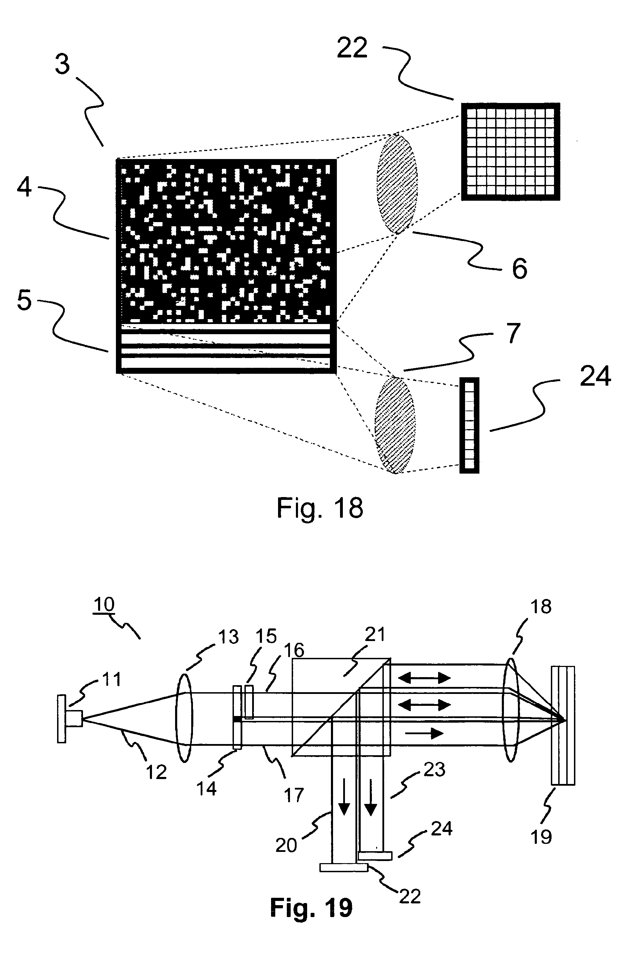

Fig. 18 schematically shows a first optical path 6, 22 for reading out the data area 4. A second optical path 7, 24 optimized for reading out the shift insensitive area 5 is also provided. A CCD 24 for reading data of the shift insensitive area 5 is a two-dimensional CCD or a one dimensional CCD providing a time dependant one dimensional signal. The lens system 7 is adapted to the used CCD 24.

In Fig. 19 an apparatus 10 for reading and/or recording a holographic storage medium 19 is shown schematically. A source of coherent light, e.g. a laser diode 11, emits a light beam 12, which is collimated by a collimating lens 13. The light beam 12 is then divided into two separate light beams 16, 17. In the example the division of the light beam 12 is achieved using a first beam splitter 14. However, it is likewise possible to use other optical components for this purpose. A spatial light modulator (SLM) 15 modulates one of the two beams, the so called "object beam" 16, to imprint a two-dimensional data pattern. Both the object beam 16 and the further beam, the so called "reference beam" 17, are focused into a holographic storage medium 19, e.g. a holographic disk or card, by an objective lens 18. At the intersection of the object beam 16 and the reference beam 17 an interference pattern appears, which is recorded in a photo-sensitive layer of the holographic storage medium 19. An apparatus for writing a data page 3 including one or more shift insensitive areas 5 has for example an encoder for encoding the data page 3 to be written using a single SLM 15.

The stored data are retrieved from the holographic storage medium 19 by illuminating a recorded hologram with the reference beam 17 only. The reference beam 17 is diffracted by the hologram structure and produces a copy of the original object beam 16. Schematically depicted object beam 20 represents the reconstructed beam part containing information from the data area 4. Depicted object beam 23 represents the reconstructed beam part containing information from the shift insensitive area 5. These reconstructed object beams 20, 23 are collimated by the objective lens 12 and directed onto two array detectors 22, 24, e.g. CCD-arrays, by a second beam splitter 21. The array detectors 22, 24 allow to reconstruct the recorded data. Detector 22 is optimized to reconstruct data stored in the data area 4, detector 24 is optimized to reconstruct data stored the shift insensitive area 5. It is understood by someone skilled in the art that an apparatus for reading and/or recording data pages 3 according to the invention can be realized in many ways. For example a further beam splitter and a further SLM can be used to completely separate the optical paths of shift insensitive data and commonly known data.

## Claims

1. Data page (3) for optical data storage on a rotating storage medium (19), whereby the data page (3) includes one or more areas (5) modulated or coded such that said areas (5) are less sensitive against a movement of the data page (3) caused by a rotation of the storage medium (19), **characterized in that** data pixels in said one or more areas (5) are larger in a movement direction (2) than in a direction perpendicular to the movement direction (2).

2. Data page (3) according to claim 1, **characterized in that** 'on'-pixels in said one or more areas (5) have the same size in movement direction (2).

3. Data page (3) according to one of the preceding claims, **characterized in that** said one or more areas (5) do not include two or more 'on'-pixels which are located side by side.

4. Data page (3) according to one of the preceding claims, **characterized in that** said one or more areas (5) include an 'on' -line and/or 'off'-line in movement direction (2).

5. Data page (3) according to one of the preceding claims, **characterized in that** said one or more areas (5) contain at least one of address information, content information, tracking control information or focusing control information.

6. Data page (32) according to one of the preceding claims, **characterized in that** it only contains information (5), which is less sensitive against a movement and is stored between two data pages(31, 33) having also common data areas (4).

7. Data page (3) according to one of the preceding claims, **characterized in that** the data page (3) contains areas with different degrees of shift sensitivity (52, 53).

8. Data page (3) according to one of the preceding claims, **characterized in that** the data page (3) is a holographic data page.

9. Optical storage medium (19), **characterized in that** the optical storage medium comprises one or multiple data pages (3) according to one of the preceding claims.

10. Apparatus (10) for reading from a rotating optical storage medium (19), whereby the optical storage medium (19) contains data pages (3) including one or more areas (5) modulated or coded such that said areas (5) are less sensitive against a movement of the data page (3) caused by a rotation of the storage medium (19), wherein data pixels in said one or more areas (5) are larger in a movement direction (2) than in a direction perpendicular to the movement direction (2), wherein the apparatus is adapted to detect and decode said areas (5).

11. Apparatus (10) according to claim 10, **characterized in that** an additional optical path (7, 23, 24) is provided for reading the areas (5), which are less sensitive against a movement.

12. Apparatus (10) for writing to an optical storage medium (19), **characterized in that** it has means to write a data page (3) according to one of the claims 1 to 8 to an optical storage medium (19).

13. Method for reading a data page (3) according to one of claims 1 to 8 from a rotating optical storage medium (19), having the steps of:
- detecting data from an area (5) of the data page (3) modulated or coded such that said area (5) is less sensitive against a movement of the data page (3)caused by a rotation of the optical storage medium (19), and
- decoding the detected data.

14. Method for writing a data page (3) according to one of claims 1 to 8 to a rotating optical storage medium (19), having the steps of:
- coding data for an area (5) of the data page (3) modulated or coded such that said area (5) is less sensitive against a movement of the data page caused by a rotation of the optical storage medium (19),
- coding data for a data area (4) of the data page (3), and
- writing the data page (3) to the optical storage medium (19).

## Patentansprüche

1. Datenseite (3) für die optische Datenspeicherung auf einem rotierenden Speichermedium (19), wobei die Datenseite (3) einen Bereich oder mehrere Bereiche (5) einschließt, die in der Weise moduliert oder codiert sind, dass die Bereiche (5) gegen eine durch eine Rotation des Speichermediums (19) verursachte Bewegung der Datenseite (3) weniger empfindlich sind,
**dadurch gekennzeichnet, dass** Datenpixel in dem einen Bereich oder in den mehreren Bereichen (5) in einer Bewegungsrichtung (2) größer als in einer Richtung senkrecht zu der Bewegungsrichtung (2) sind.

2. Datenseite (3) nach Anspruch 1, **dadurch gekennzeichnet, dass** 'Ein'-Pixel in dem einen Bereich oder in den mehreren Bereichen (5) in Bewegungsrichtung (2) dieselbe Größe aufweisen.

3. Datenseite (3) nach einem der vorhergehenden Ansprüche, **dadurch gekennzeichnet, dass** der eine Bereich oder die mehreren Bereiche (5) nicht zwei oder mehr 'Ein'-Pixel einschließen, die nebeneinander angeordnet sind.

4. Datenseite (3) nach einem der vorhergehenden Ansprüche, **dadurch gekennzeichnet, dass** der eine Bereich oder die mehreren Bereiche (5) in Bewegungsrichtung (2) eine 'Ein'-Linie und/oder eine 'Aus'-Linie einschließen.

5. Datenseite (3) nach einem der vorhergehenden Ansprüche, **dadurch gekennzeichnet, dass** der eine Bereich oder die mehreren Bereiche (5) Adresseninformationen und/oder Inhaltsinformationen und/oder Spurhaltungssteuerungsinformationen und/oder Fokussierungssteuerungsinformationen enthalten.

6. Datenseite (32) nach einem der vorhergehenden Ansprüche, **dadurch gekennzeichnet, dass** sie nur Informationen (5) enthält, die gegen eine Bewegung weniger empfindlich sind, und zwischen zwei Datenseiten (31, 33) gespeichert ist, die auch übliche Datenbereiche (4) aufweisen.

7. Datenseite (3) nach einem der vorhergehenden Ansprüche, **dadurch gekennzeichnet, dass** die Datenseite (3) Bereiche mit unterschiedlichen Graden an Verschiebungsempfindlichkeit (52, 53) enthält.

8. Datenseite (3) nach einem der vorhergehenden Ansprüche, **dadurch gekennzeichnet, dass** die Datenseite (3) eine holographische Datenseite ist.

9. Optisches Speichermedium (19), **dadurch gekennzeichnet, dass** das optische Speichermedium eine oder mehrere Datenseiten (3) nach einem der vorhergehenden Ansprüche umfasst.

10. Vorrichtung (10) zum Lesen von einem rotierenden optischen Speichermedium (19), wobei das optische Speichermedium (19) Datenseiten (3) enthält, die einen Bereich oder mehrere Bereiche (5) einschließen, die in der Weise moduliert oder codiert sind, dass die Bereiche (5) gegen eine durch eine Rotation des Speichermediums (19) verursachte Bewegung der Datenseite (3) weniger empfindlich sind, wobei Datenpixel in dem einen Bereich oder in den mehreren Bereichen (5) in einer Bewegungsrichtung (2) größer als in einer Richtung senkrecht zu der Bewegungsrichtung (2) sind, wobei die vorrichtung zum Erfassen und Decodieren der Bereiche (5) ausgelegt ist.

11. Vorrichtung (10) nach Anspruch 10, **dadurch gekennzeichnet, dass** zum Lesen der Bereiche (5), die weniger empfindlich gegen eine Bewegung sind, ein zusätzlicher optischer Weg (7, 23, 24) vorgesehen ist.

12. Vorrichtung (10) zum Schreiben auf ein optisches Speichermedium (19), **dadurch gekennzeichnet, dass** sie Mittel zum Schreiben einer Datenseite (3) nach einem der Ansprüche 1 bis 8 auf ein optisches Speichermedium (19) aufweist.

13. Verfahren zum Lesen einer Datenseite (3) nach einem der Ansprüche 1 bis 8 von einem rotierenden optischen Speichermedium (19), wobei das Verfahren die folgenden Schritte aufweist:
- Erfassen von Daten von einem Bereich (5) der Datenseite (3), der in der Weise moduliert oder codiert ist, dass der Bereich (5) gegen eine durch eine Rotation des optischen Speichermediums (19) verursachte Bewegung der Datenseite (3) weniger empfindlich ist, und
- Decodieren der erfassten Daten.

14. Verfahren zum Schreiben einer Datenseite (3) nach einem der Ansprüche 1 bis 8 auf ein rotierendes optisches Speichermedium (19), wobei das Verfahren die folgenden Schritte aufweist:
- Codieren von Daten für einen Bereich (5) der Datenseite (3), die in der Weise moduliert oder codiert sind, dass der Bereich (5) gegen eine durch eine Rotation des optischen Speichermediums (19) verursachte Bewegung der Datenseite weniger empfindlich ist,
- Codieren von Daten für einen Datenbereich (4) der Datenseite (3), und
- Schreiben der Datenseite (3) auf das optische Speichermedium (19).

## Revendications

1. Page de données (3) permettant le stockage de données optiques sur un support de stockage rotatif (19), où la page de données (3) comprend une ou plusieurs zones (5) modulées ou codées telles que lesdites zones (5) sont moins sensibles à un mouvement de la page de données (3) provoqué par une rotation du support de stockage (19), **caractérisée en ce que** les pixels de données dans ladite zone ou dans lesdites zones (5) sont plus grands dans un sens de mouvement (2) que dans un sens perpendiculaire au sens de mouvement (2).

2. Page de données (3) selon la revendication 1, **caractérisée en ce que** les pixels allumés dans ladite zone ou dans lesdites zones (5) ont la même taille dans le sens de mouvement (2).

3. Page de données (3) selon une des revendications précédentes, **caractérisée en ce que** ladite zone ou lesdites zones (51) ne comprennent pas deux ou plusieurs pixels allumés qui sont situés côte à côte.

4. Page de données (3) selon une des revendications précédentes, **caractérisée en ce que** ladite zone ou lesdites zones (5) comprennent un sens de mouvement « en ligne » et/ou « hors ligne » (2).

5. Page de données (3) selon une des revendications précédentes, **caractérisée en ce que** ladite ou lesdites zones (5) comprennent au moins une des informations d'adresse, informations de contenu, informations de contrôle de suivi ou informations de contrôle de focalisation.

6. Page de données (32) selon une des revendications précédentes, **caractérisée en ce qu'**elle contient uniquement des informations (5), qui est moins sensible au mouvement et qui est stockée entre deux pages de données (31, 33) présentant également des zones de données communes (4).

7. Page de données (3) selon une des revendications précédentes, **caractérisée en ce que** la page de données (3) contient des zones avec différents degrés de sensibilité de déplacement (52, 53).

8. Page de données (3) selon une des revendications précédentes, **caractérisée en ce que** la page de données (3) est une page de données holographiques.

9. Support de stockage optique (19), **caractérisé en ce que** le support de stockage optique comprend une ou de multiples pages de données (3) selon une des revendications précédentes.

10. Appareil (10) permettant la lecture à partir d'un support de stockage optique rotatif (19), le support de stockage optique (19) contenant des pages de données (3) incluant une ou plusieurs zones (5) modulées ou codées telles que lesdites zones (5) sont moins sensibles au mouvement de la page de données (3) provoqué par une rotation du support de stockage (19), où les pixels de données dans ladite zone ou dans lesdites zones (5) sont plus grands dans un sens de mouvement (2) que dans un sens perpendiculaire au sens de mouvement (2) où l'appareil est adapté à la détection et décodage desdites zones (5).

11. Appareil (10) selon la revendication 10, **caractérisé en ce qu'**un chemin optique supplémentaire (7, 23, 24) est fourni pour la lecture des zones (5), qui sont moins sensibles au mouvement.

12. Appareil (10) permettant l'écriture sur un support de stockage optique (19), **caractérisé en ce qu'**il dispose de moyen d'écriture d'une page de données (3) selon une des revendications 1 à 8 sur un support de stockage optique.

13. Procédé permettant la lecture d'une page de données (3) selon une des revendications 1 à 8 à partir d'un support de stockage optique rotatif (19), comprenant les étapes de :
- détection des données d'une zone (5) de la page de données (3) modulée ou codée telle que ladite zone (5) est moins sensible au mouvement de la page de données (3) provoqué par la rotation du support de stockage optique (19) et
- décodage des données détectées.

14. Procédé permettant l'écriture d'une page de données (3) selon une des revendications 1 à 8 sur un support de stockage optique rotatif (19), comprenant les étapes :
- de codage des données pour une zone (5) de la page de données (3) modulée ou codée telle que ladite zone (5) est moins sensible au mouvement de la page de données provoqué par une rotation du support de stockage optique (19),
- codage des données pour une zone de données (4) de la page de données (3) et d'écriture de la page de données (3) sur le support de stockage de données (19).
